Europäisches Patentamt

European Patent Office

Office européen des brevets

(19)

(11) Veröffentlichungsnummer: **0 034 197**
**B1**

(12) **EUROPÄISCHE PATENTSCHRIFT**

(45) Veröffentlichungstag der Patentschrift:
21.09.83

(51) Int. Cl.³: **B 01 D 46/02**

(21) Anmeldenummer: **80103530.4**

(22) Anmeldetag: **24.06.80**

(54) **Befestigungseinrichtung für Filterschläuche in Staubgasfiltern.**

(30) Priorität: **06.02.80 DE 3004222**

(43) Veröffentlichungstag der Anmeldung:
**26.08.81 Patentblatt 81/34**

(45) Bekanntmachung des Hinweises auf die Patenterteilung:
**21.09.83 Patentblatt 83/38**

(84) Benannte Vertragsstaaten:
**AT BE CH FR GB IT LI NL SE**

(56) Entgegenhaltungen:
**DE-A-2 120 480**
**DE-B-1 673 215**
**US-A-3 844 750**
**US-A-4 138 234**
**US-A-4 194 894**

(73) Patentinhaber: **Intensiv-Filter GmbH & Co KG.,**
**Vosskuhlstrasse 63, D-5620 Velbert 11 (DE)**

(72) Erfinder: **Kordas, Friedel, Landschützstrasse 20b,**
**D-4350 Recklinghausen (DE)**

(74) Vertreter: **Geiersbach, Walter, Dipl.-Ing., Wickrather**
**Strasse 43, D-4000 Düsseldorf 11 (DE)**

ACTORUM AG

Befestigungseinrichtung für Filterschläuche in Staubgasfiltern

Die Erfindung betrifft eine Einrichtung zum staubdichten Befestigen von Filterschläuchen in dem zwischen Roh- und Reingasraum liegenden Trennboden bei Staubfiltern in Form einer Schnellbefestigung, bei der keinerlei Werkzeuge zu deren Handhabung erforderlich sind.

Bei den bekannten Filteranlagen werden die Filterschläuche durch Schranbverbindungen, Drahtbügel aus Federdraht, Klemmbügel oder spezielle Halterungen mit zwei oder mehreren Hebeln auf dem Trennboden befestigt. Weiterhin sind Staubgasfilter bekannt, bei denen die Filterschläuche in entsprechend geformte Stutzen eingesetzt und durch das Einschieben von entsprechenden Gegenstücken in dem Trennboden der Filter ohne die Zuhilfenahme von Werkzeugen befestigt werden können.

Bei allen gebräuchlichen Staubgasfilteranlagen müssen die Filterschläuche von Zeit zu Zeit ausgewechselt werden, weil die eingebauten Filterschläuche verschleissen, sich mit dem zu filternden Produkt zusetzen oder, wenn das Produkt gewechselt wird, das vorher gefilterte Produkt mit dem nachfolgend zu filternden Produkt nicht in Berührung kommen darf.

Das Wechseln der Filterschläuche ist eine unproduktive Tätigkeit, die deshalb mit geringstmöglichem Zeitaufwand durchgeführt werden soll. Ferner stehen für diese Arbeiten meistens nur Hilfskräfte ohne besondere Fachkenntnisse zur Verfügung. Deshalb muss das Wechseln der Filterschläuche in der praktischen Ausführung möglichst einfach sein. Fehler müssen beim Einbau der Filterschläuche unbedingt vermieden werden, weil fehlerhaft eingebaute Filterschläuche den Durchtritt von Staub ermöglichen. Das ist jedoch nach den geltenden Umweltschutzgesetzen für Filteranlagen nicht zulässig.

Weiterhin ist es erforderlich, den Trennboden beim Schlauchwechsel zu begehen. Deshalb sind alle die Begehbarkeit einengenden Ein- und Aufbauten aus Gründen der schnellen Durchführbarkeit und der Unfallverhütung als nachteilig anzusehen.

Bei herkömmlichen Filteranlagen ist der Ein- und Ausbau der mit Drahtbügeln od.dgl. befestigten Filterschläuche zwar auch ohne die Zuhilfenahme von Werkzeugen innerhalb eines geringen Zeitraumes möglich, jedoch wirken die nach dem Einbau der Schläuche umgeklappten Drahtbügel und deren Gegenhalterungen sehr störend bei der Begehung des Trennbodens.

Die ebenfalls bekannten Filterschlauchbefestigungen mit eingeschobenen Stutzen (DE-A Nr. 2600339) sind nur für kleine Filterschlauchdurchmesser praktikabel, da die Haft- und Reibungskräfte für eine Handhabung ohne die Zuhilfenahme von Werkzeugen dann zu gross werden. Bei stark haftenden Stäuben oder bei Korrosion an den eingeschobenen Stutzen (mit diesen Umständen muss bei Filteranlagen im praktischen Betrieb immer gerechnet werden) ist der Ausbau der Filterschläuche nur mit erheblicher Mühe möglich.

Der Erfindung liegt die Aufgabe zugrunde, eine mit wenigen Handgriffen, ohne die Zuhilfenahme von Werkzeugen zu manipulierende, staubdichte Befestigung der Filterschläuche zu schaffen, die an ihrer Oberfläche möglichst glatt ist und keinerlei Aufbauten auf dem Trennboden benötigt, die auch für grosse Filterschlauchdurchmesser geeignet und auch bei haftenden Stäuben und bei Korrosion an der Befestigungseinrichtung leicht gelöst werden kann.

Diese Aufgabe wird gemäss der Erfindung dadurch gelöst, dass an dem offenen Ende der Filterschläuche ein in einem elastischen Stutzen schwenkbar gelagerter Klemmring angeordnet ist, der an zwei einander gegenüber liegenden Seiten mit Abflachungen versehen ist.

Der mit der Erfindung erzielbare technische Fortschritt beruht auf dem Vorteil, dass der Filterschlaub jederzeit schnell, sicher und mühelos ausgewechselt werden kann. Der Stutzen lässt sich mit hochgeschwenktem Klemmring einwandfrei in den Filterschlauch hineinschieben oder aus ihm herausziehen, so dass ein einfacher und narrensicherer Ein- und Ausbau möglich ist. Ein weiterer Vorteil besteht darin, den elastischen Stutzen bei hochgeschwenktem Klemmring nach innen zusammendrücken zu können. Dadurch ist auch bei schwierigen Staubarten oder noch nach jahrelangem Betrieb ein leichter Ausbau möglich.

Die Erfindung ist in der Zeichnung an einem Ausführungsbeispiel veranschaulicht. Es zeigt:

Fig. 1 die Befestigungseinrichtung in bevorzugter Ausführung im Einbauzustand mit angebautem Filterstützkorb im Querschnitt nach Linie I-I in Fig. 2,

Fig. 2 die Befestigungseinrichtung von oben gesehen,

Fig. 3 die Befestigungseinrichtung mit ausgeschwenktem Klemmring im Zustand vor dem Einbau bzw. nach dem Ausbau,

Fig. 4 im linken Halbschnitt eine Befestigungseinrichtung mit der Klemmringausführung als Oberteil eines Injektors und im rechten Halbschnitt eine Einrichtung mit der Klemmringausführung als umlaufender Ring, und

Fig. 5 eine Befestigungseinrichtung mit geschlitztem Klemmring von oben gesehen.

In einem Staubgasfilter ist ein Rohgasraum 2 von dem Reingasraum 3 durch einen Trennboden 4 getrennt, der mit Öffnungen für je einen Filterschlauch 1 versehen ist. In das offene Ende des Filterschlauches 1 ist ein elastischer Stutzen 5 eingesetzt, der aus einem elastischen Material besteht. Reicht die Elastizität des Materials für die notwendige Dehnung nicht aus, ist der Stutzen 5 als geschlitzter Ring ausgebildet. Zur Sicherung gegen ein unbeabsichtigtes Herausgleiten des Filterschlauches 1 und der Befestigungseinrichtung aus dem Trennboden 4 ist der Stutzen 5 mit einer nach aussen gewölbten Rille 5a versehen.

Zur Erzeugung der in radialer Richtung wirkenden Befestigungs- und Dichtkraft ist in dem Stutzen 5 ein Klemmring 6 schwenkbar gelagert, der an zwei einander gegenüber liegenden Seiten mit Abflachungen 6a versehen ist. An jeder Seite des Schlitzes im Stutzen 5 sind je zwei Erhöhungen 5b angeordnet, zwischen die der Klemmring 6 einrastet und zwischen denen er im Einbauzustand arretiert ist. Die Arretierungskraft ist durch die Grösse der Erhöhungen in ihrer Wirkung variabel.

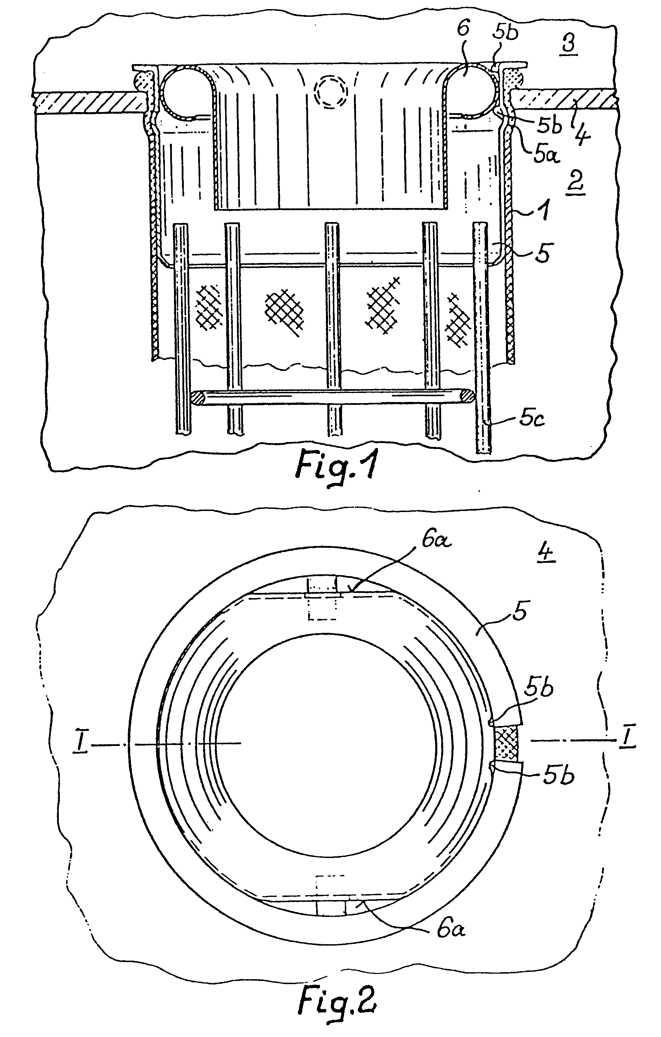

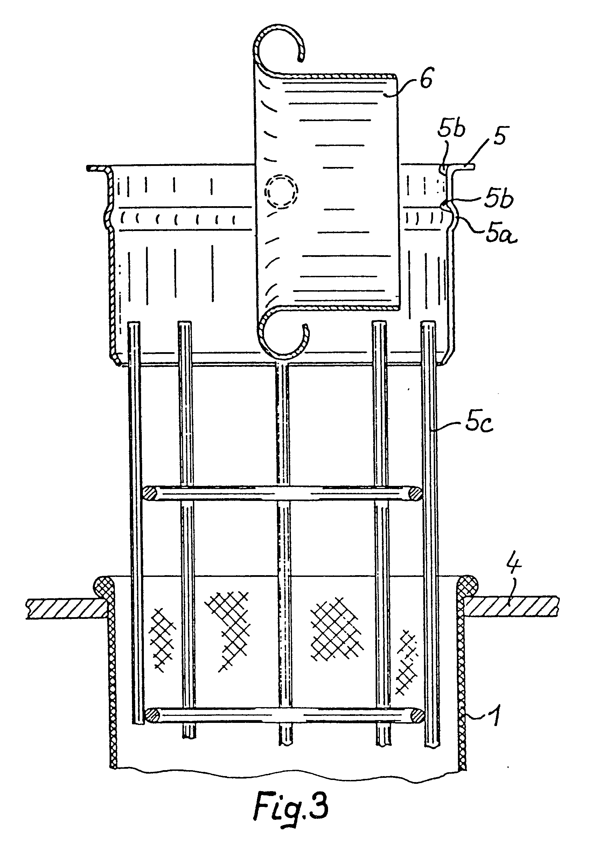

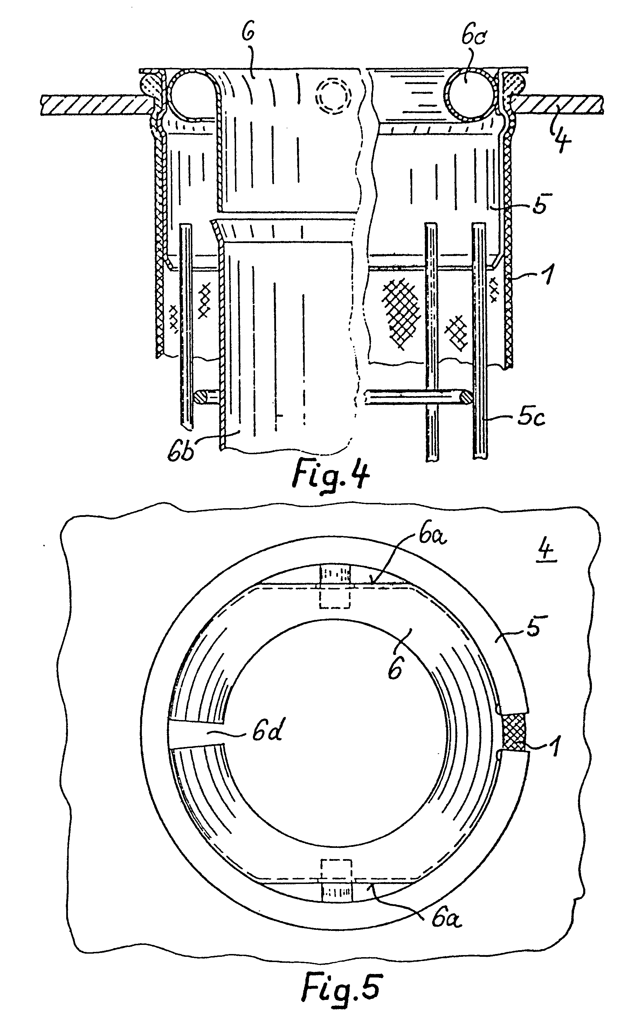

In entriegeltem und hochgeschwenktem Zustand beim Ein- oder Ausbau des Stutzens 5 ist der Klemmring 6 als Handgriff verwendbar, und zwar ohne oder mit angebautem Filterstützkorb 5c, wie aus Fig. 3 ersichtlich ist. Der Klemmring 6 kann je nach Art des bei der Filteranlage verwendeten Rückspülsystems in verschiedenen Ausführungsformen eingesetzt werden. Er kann, wie in Fig. 1 dargestellt, die Form einer Einlaufdüse haben oder, wie aus Fig. 4 ersichtlich ist, das Oberteil eines Injektors oder nur als umlaufender Ring 6c ausgebildet sein.

Wie Fig. 5 zeigt, kann auch der Klemmring 6 mit einem Schlitz 6d versehen sein. Dadurch wird er elastisch und ermöglicht den Ausgleich grösserer Unterschiede in der Dicke des Materials für die Filterschläuche.

Der Stutzen 5 ohne oder mit Filterschlauchstützkorb 5c wird jeweils mit einem Handgriff durch ruckartiges Schwenken des Klemmringes 6 um 90° befestigt oder gelöst. Der Klemmring 6 dient beim Ein- und Ausbau gleichzeitig als Handgriff. Der den Klemmring 6 aufnehmende Stutzen 5 wird durch den Schlitz derart elastisch, dass er beim Einschwenken des Klemmringes 6 in den Befestigungszustand den Filterschlauch 1 auf dem gesamten Umfang fest gegen den Lochrand des Trennbodens presst und damit eine staubdichte Verbindung entstehen lässt. Die umlaufende, nach aussen gewölbte Rille 5a in dem Stutzen 5 ermöglicht einen einwandfreien Sitz und vermindert ein unbeabsichtigtes Herausgleiten des Filterschlauches 1 und der Befestigungseinrichtung.

## Patentansprüche

1. Befestigungseinrichtung zur staubdichten Befestigung von Filterschläuchen in einem Trennboden zwischen Roh- und Reingasraum bei Staubgasfiltern, dadurch gekennzeichnet, dass an dem offenen Ende der Filterschläuche (1) ein in einem elastischen Stutzen (5) schwenkbar gelagerter Klemmring (6) angeordnet ist, der an zwei einander gegenüber liegenden Seiten mit Abflachungen (6a) versehen ist.

2. Einrichtung nach Anspruch 1, dadurch gekennzeichnet, dass der Stutzen (5) als geschlitzter Ring ausgebildet ist.

3. Einrichtung nach einem der Ansprüche 1 oder 2, dadurch gekennzeichnet, dass der Stutzen (5) mit einer nach aussen gewölbten Rille (5a) versehen ist.

4. Einrichtung nach einem der Ansprüche 2 oder 3, dadurch gekennzeichnet, dass an jeder Seite des Schlitzes im Stutzen (5) je zwei Erhöhungen (5b) angeordnet sind.

5. Einrichtung nach einem oder mehreren der Ansprüche 1 bis 4, dadurch gekennzeichnet, dass der Klemmring (6) in entriegeltem oder hochgeschwenktem Zustand beim Ein- und Ausbau des Stutzens (5) ohne oder mit angebautem Filterstützkorb (5c) als Handgriff verwendbar ist.

6. Einrichtung nach einem oder mehreren der Ansprüche 1 bis 5, dadurch gekennzeichnet, dass der Klemmring (6) als Einlaufdüse ausgebildet ist.

7. Einrichtung nach einem oder mehreren der Ansprüche 1 bis 5, dadurch gekennzeichnet, dass der Klemmring (6) als Oberteil eines geteilten Injektors (6b) ausgebildet ist.

8. Einrichtung nach einem oder mehreren der Ansprüche 1 bis 5, dadurch gekennzeichnet, dass der Klemmring (6) die Form eines Ringes (6c) hat.

9. Einrichtung nach einem oder mehreren der Ansprüche 1 bis 5 und 8, dadurch gekennzeichnet, dass der Klemmring (6) in Ringform (6c) mit einem Schlitz (6d) versehen ist.

## Claims

1. A device for fixing filter hoses in a dust-tight manner in a partition between raw and clean gas chambers in dust gas filters, characterized in that at the open end of the or each filter hose (1) a locking ring (6) is provided which is pivotably mounted in a resilient tubular holder (5) and is supplied with flat portions (6a) on two mutually opposite sides.

2. A device as claimed in claim 1, characterized in that the tubular holder (5) is in the form of a split ring.

3. A device as claimed in claim 1 or 2, characterized in that the tubular holder (5) is provided with a groove (5) convex towards the outside.

4. A device as claimed in claim 2 or 3, characterized in that two protuberances (5b) are provided on each side of the slit in the tubular holder (5).

5. A device as claimed in one or more of claims 1 to 4, characterized in that the locking ring (6) can be used as a handle when in an unlocked or raised condition in the event of insertion or removal of the tubular holder (5), irrespective of whether a filter supporting basket (5c) is attached.

6. A device as claimed in any of claims 1 to 5, characterized in that the locking ring (6) takes the form of an inlet nozzle.

7. A device as claimed in any of claims 1 to 5, characterized in that the locking ring (6) takes the form of the upper part of a split injector (6b).

8. A device as claimed in any of claims 1 to 5, characterized in that the locking ring (6) takes the form of a ring (6c) of annular cross-section.

9. A device as claimed in any of claims 1 to 5 and 8, characterized in that the locking ring (6) taking the form of a ring (6c) of annular cross-section is provided with a slit (6d).

## Revendications

1. Installation de fixation étanche à la poussière pour des manches filtrantes, prévue dans un fond séparateur placé entre le compartiment à gaz brut et le compartiment à gaz propre de filtres à poussière, caractérisée en ce que, à l'extrémité ouverte des manches filtrantes (1), est disposée une bague de serrage (6) pouvant pivoter dans une tubulure élastique (5), cette bague étant munie de méplats (6a) se trouvant sur deux côtés se faisant face.

2. Installation suivant la revendication 1, caractérisée en ce que la tubulure (5) est constituée par une bague fendue.

3. Installation suivant l'une des revendications 1 ou 2, caractérisée en ce que la tubulure (5) est munie d'une rainure convexe (5a).

4. Installation suivant l'une des revendications 2 ou 3, caractérisée en ce que deux saillies (5b) sont prévues sur chaque côté de la fente pratiquée dans la tubulure (5).

5. Installation suivant l'une ou plusieurs des revendications 1 à 4, caractérisée en ce qu'à l'état déverrouillé ou pivoté vers le haut, à la pose et à la dépose de la tubulure (5), avec ou sans panier (5c) de soutien des filtres, la bague de serrage (6) est utilisable comme poignée.

6. Installation suivant l'une ou plusieurs des revendications 1 à 5, caractérisée en ce que la bague de serrage (6) est constituée par une buse d'introduction.

7. Installation suivant l'une ou plusieurs des revendications 1 à 5, caractérisée en ce que la bague de serrage (6) constitue la partie supérieure d'un injecteur divisé (6b).

8. Installation suivant l'une ou plusieurs des revendications 1 à 5, caractérisée en ce que l'organe de serrage (6) a la forme d'une bague (6c).

9. Installation suivant l'une ou plusieurs des revendications 1 à 5 et 8, caractérisée en ce que la bague de serrage (6), de forme annulaire (6c), présente une fente (6d).

Fig.1

Fig.2

Fig.3

**Fig.4**

**Fig.5**